(19) Europäisches Patentamt
European Patent Office
Office européen des brevets

(11) **EP 2 541 193 A1**

(12) **EUROPÄISCHE PATENTANMELDUNG**

(43) Veröffentlichungstag:
**02.01.2013 Patentblatt 2013/01**

(51) Int Cl.:
***G01B 11/24*** *(2006.01)*

(21) Anmeldenummer: **11171582.7**

(22) Anmeldetag: **27.06.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Hexagon Technology Center GmbH 9435 Heerbrugg (CH)**

(72) Erfinder: **Jensen, Thomas CH-9400 Rorschach (CH)**

(74) Vertreter: **Kaminski Harmann Patentanwälte AG Landstrasse 124 9490 Vaduz (LI)**

(54) **Interferometrisches Entfernungsmessverfahren zum Vermessen von Oberflächen und ebensolche Messanordnung**

(57) In einem Entfernungsmessverfahren zur Vermessung von Oberflächen (13) wird ein frequenzmodulierter Laserstrahl zur Bereitstellung von Messstrahlung (MS) mit einer Kohärenzlänge erzeugt und als Messstrahlung (MS) auf die sich innerhalb eines vorgegebenen Distanzbereichs befindende Oberfläche (13) emittiert. Die von der Oberfläche (13) zurückgestreute Messstrahlung (MS) wird wieder empfangen und dient zum interferometrischen Entfernungsmessen von einem Bezugspunkt zur Oberfläche (13), wobei ein Mess- und einem Referenzinterferometerarm Verwendung finden. Hierbei liegt der vorgegebene Distanzbereich zumindest teilweise ausserhalb der Kohärenzlänge und die Messstrahlung wird in zwei Strahlungsanteile aufgeteilt, wobei einer der Strahlungsanteile gegenüber dem anderen zeitlich so verzögert wird, dass die eine hierdurch bewirkte optische Pfaddifferenz der zu einer Entfernung im vorgegebenen Distanzbereich korrespondierenden optischen Pfaddifferenz zu- oder abzüglich der Kohärenzlänge des Lasers entspricht.

*Fig. 7*

EP 2 541 193 A1

**EP 2 541 193 A1**

**Beschreibung**

Die Erfindung betrifft ein interferometrisches Entfernungsmessverfahren zum Vermessen von Oberflächen nach dem Oberbegriff des Anspruchs 1 und eine ebensolche Entfernungsmessanordnung nach dem Oberbegriff des Anspruchs 8 sowie ein Messgerät zur Vermessung von Oberflächen.

In vielen Anwendungsbereichen besteht das Bedürfnis, Oberflächen von Objekten und damit auch die Objekte selbst mit hoher Genauigkeit zu vermessen. Dies gilt insbesondere für die fertigende Industrie, für die das Vermessen und Überprüfen von Oberflächen von Werkstücken hohe Bedeutung hat. Zu diesem Zweck existiert eine Vielzahl von Ansätzen, die von kontaktierenden Verfahren bis hin zu optischen Sensoren reichen. Im Bereich der hochpräzisen optischen Verfahren spielen interferometrische Messprinzipien, insbesondere in Zusammenhang mit der Verwendung von Koordinatenmessgeräten, eine zunehmende Rolle.

Eine Möglichkeit besteht in der Verwendung von Weisslichtinterferometrie zur hochpräzisen Vermessung. Hierbei erfolgt der Einsatz entweder scannend, d.h. durch Verstellung des Interferometers, und damit langsam oder bei spektral aufgelöster Detektion in der Regel unter Beschränkung auf einen Messbereich von wenigen Millimetern. Damit ist der Einsatzbereich solcher Anordnungen eingeschränkt und insbesondere Werkstücke mit stark strukturierter Oberfläche und entsprechend variierenden Messdistanzen sind nicht oder nur mit großen Einschränkungen, wie bspw. langen Verfahrzeiten, zu vermessen.

Andere Verfahren verwenden einen frequenzmodulierten Laserstrahl als Messstrahlung für eine interferometrische Anordnung. So ist bspw. aus der WO 2009/036861 A1 ein Ansatz bekannt, bei dem in einem Verfahren zur Vermessung von Oberflächen ein frequenzmodulierter Laserstrahl erzeugt und auf die zu vermessende Oberfläche emittiert wird. Nach dem Empfangen der von der Oberfläche als Ziel zurückgestreuten Messstrahlung wird die Entfernung interferometrisch bestimmt, wobei ein Mess- und Referenzinterferometerarm mit einem teilweise gemeinsamen Strahlengang verwendet werden. Abweichungen vom im wesentlichen senkrechten Auftreffen der Messstrahlung auf die Oberfläche beim Entfernungsmessen werden algorithmisch berücksichtigt oder beim abtastenden Führen durch Steuern des Emittierens der Messstrahlung vermieden oder verringert.

Der teilweise gemeinsame Strahlengang von Mess- und Referenzinterferometerarm wird hierbei durch einen Reflex innerhalb des optischen Messkopfes begrenzt, der hierdurch das Referenzinterferometer definiert. Diese sogenannte Common-Path-Architektur erlaubt es, die lokale Oszillatorebene innerhalb der Messkopfoptik, z.B. auch an der optischen Austrittsfläche, und damit nahe am Ziel anzuordnen. Der Vorteil dieses Aufbaus liegt darin, dass sich Umwelteinflüsse, wie z.B. Temperaturänderungen oder Vibrationen, auf beide Interferometerarme in gleicher Weise auswirken, so dass die generierten Signale diesbezüglich gleichen Einflüssen unterliegen. Ein Nachteil des Aufbaus ist jedoch die Erfordernis einer großen Kohärenzlänge, wenn eine ausreichende Signalstärke innerhalb des Arbeitsbereichs gewährleistet werden soll.

Im Bereich der Weisslichtinterferometrie werden hingegen externe Interferometerarme mit verstellbarer Verzögerung verwendet. Allerdings sind für den häufigen Anwendungsbereich der Medizintechnik auch andere Rahmenbedingungen gegeben. So sind die abzutastenden bzw. zu vermessenden Strukturen grundsätzlich andersartig und in Hinblick auf die Distanzen geringer strukturiert. Zudem ist keine absolute Distanzinformation erforderlich und die typischen für eine Messung benötigten Zeitskalen sind geringer als bei Vermessungen von industriellen Teilen. Hier werden aufgrund der zu vermessenden Oberflächen längere Messdauern benötigt und aufgrund der zu vermessenden Geometrien sind zumeist auch größere Messbereiche erforderlich.

Dieser Messbereich wird bei interferometrischen Messanordnungen mit frequenzmodulierter Laserstrahlung jedoch durch deren Kohärenzlänge begrenzt, so dass der Anwendungsbereich Beschränkungen unterliegt und steuerungsseitig entsprechender Aufwand erforderlich ist, um ein Messobjekt vollständig und in kurzer Zeit abtasten und vermessen zu können.

Eine Aufgabe besteht darin, ein verbessertes Messverfahren bzw. Messanordnung zur Vermessung von Oberflächen bzw. zur Erfassung von Oberflächentopographien bereitzustellen.

Eine weitere Aufgabe besteht darin, ein solches Messverfahren bzw. eine Messanordnung bereitzustellen, welche die durch die Kohärenzlänge bestehenden Beschränkungen überwindet und somit den messbaren Distanzbereich vergrössert.

Diese Aufgaben werden durch die Gegenstände der Ansprüche 1, 8 bzw. 15 oder der abhängigen Ansprüche gelöst bzw. die Lösungen weitergebildet.

Die Erfindung nutzt ein interferometrisches Messprinzip mit frequenzmodulierter, d.h. durchstimmbarer Laserquelle und entsprechendem Messaufbau, wie es beispielhaft auch in der WO 2009/036861 A1 beschrieben ist.

Erfindungsgemäss wird neben dem normalen zur Distanzmessung verwendeten Strahlungsfeld eine verzögerte Kopie bereitgestellt, deren Verzögerung im wesentlichen der Laufzeit der eigentlichen Messstrahlung zum Ziel und wieder zurück entspricht, so dass die effektive Distanz verringert wird. Durch diesen Ansatz wird der Arbeitspunkt der gesamten Messanordnung in Richtung auf das Ziel verschoben, so dass die vermessbare Maximaldistanz vergrössert und die durch die Kohärenzlänge bestehende Beschränkung überwunden wird. Die durch die Verzögerung bewirkte optische Pfaddifferenz entspricht dabei der zu einer Entfernung im vorgegebenen Distanzbereich korrespondierenden optischen Pfaddifferenz zu- oder abzüglich der Kohärenzlänge des Lasers. Insbesondere entspricht die optische Pfaddifferenz der Verzögerung höchstens der zur Distanz zu der zu vermessenden Oberfläche korrespondierenden optischen Pfaddifferenz und wenigstens der zur Distanz zu der zu vermessenden Oberfläche korrespondierenden optischen Pfaddifferenz abzüglich der Kohärenzlänge des Lasers oder aber wenigstens der zur Distanz zu der zu vermessenden Oberfläche korrespondierenden optischen Pfaddifferenz und höchstens der zur Distanz zu der zu vermessenden Oberfläche korrespondierenden optischen Pfaddifferenz zuzüglich der Kohärenzlänge des Lasers.

Ein Ansatz zur Realisierung eines erfindungsgemässen verzögerten Strahlungsfelds ist die Integration eines Strahlteilers mit nachfolgender optischer Verzögerungsstrecke hinter der Laserquelle. Eine solche Verzögerungsstrecke kann bspw. sowohl als Freistrahloptik als auch als Faserstrecke in einem Mach-Zehnder-Interferometer realisiert werden. Hierdurch lassen sich im Prinzip identische Strahlungsfelder erzeugen, die nur um die optische Pfaddifferenz gegenseitig zeitlich verschoben bzw. verzögert sind.

Beispielsweise kann ein Mach-Zehnder-Interferometer als Verzögerungsstrecke bzw. Verzögerungskomponente in eine Common-Path-Anordnung ohne Änderung der Standard-Auslegung integriert werden. Hierdurch kann z.B. der Arbeitspunkt des Interferometers ausserhalb der Optik verlagert werden, so dass die normalerweise durch die Kohärenzlänge bewirkten Beschränkungen überwunden werden können. Hierbei kann der Messbereich von bspw. 30 mm beibehalten werden, lediglich seine Lage gegenüber dem optischen Messkopf wird in Zielrichtung verschoben, so dass auch grössere Distanzen bzw. Abstände zum Messobjekt realisierbar werden. Grössere Distanzen erlauben wiederum höhere Verfahrgeschwindigkeiten des Probenkopfes und damit kürzere Messzeiten oder andere Messpfad-Geometrien.

Eine weitere Verbesserung der erfindungsgemässen Anordnung kann zudem durch ein auf die Solldistanz hin ausgelegte Brennweite des Linsensystems des Probenkopfes erreicht werden.

Um eine Veränderung der Verzögerung während oder zwischen den Messungen zu verhindern, ist es vorteilhaft, die Verzögerungskomponente mechanisch und thermische möglichst robust auszugestalten. Die Kalibrierung kann hierbei mittels bekannter Verfahren erfolgen, z.B. durch Abtasten einer Referenzsphäre mit bekannter Geometrie.

Ein erfindungsgemässes Messverfahren und eine erfindungsgemässe Messanordnung zum interferometrischen Vermessen von Oberflächen werden nachfolgend anhand von in der Zeichnung schematisch dargestellten Ausführungsbeispielen rein beispielhaft näher beschrieben oder erläutert. Im einzelnen zeigen

Fig.1    die schematische Darstellung des erfindungsgemässen Grundprinzips der optischen Verzögerung eines Strahlungsanteils in einer interferometrischen Entfernungsmessanordnung;

Fig.2    die Darstellung eines ersten Ausführungsbeispiels einer Verzögerungsstrecke für die erfindungsgemässe Entfernungsmessanordnung;

Fig.3    die Darstellung der Wirkung des erfindungsgemässen Grundprinzips der optischen Verzögerung;

Fig.4    die schematische Darstellung der interferometrischen Messanordnung in einem Messgerät des Stands der Technik zur Vermessung von Oberflächen;

Fig.5    die Darstellung des strukturellen Aufbaus eines Probenkopfs für ein ebensolches Messgerät;

Fig.6    die schematische Darstellung von Sende- und Empfangsoptik für ein ebensolches Messgerät;

Fig.7    die schematische Darstellung eines ersten Ausführungsbeispiels der erfindungsgemässen interferometrischen Messanordnung;

Fig.8a-b    die graphische Darstellung in der Frequenzdomäne für ein erstes Beispiel der Strahlungsfelder für das erste Ausführungsbeispiel;

Fig.9a-b    die graphische Darstellung in der Frequenzdomäne für ein zweites Beispiel der Strahlungsfelder für das erste Ausführungsbeispiel;

Fig.10    die schematische Darstellung eines zweiten Ausführungsbeispiels der erfindungsgemässen interferometrischen Messanordnung;

Fig.11    die schematische Darstellung eines dritten Ausführungsbeispiels der erfindungsgemässen interferometrischen Messanordnung;

Fig.12    die Darstellung einer Kohärenzkurve für die nachfolgenden Simulationen;

Fig.13    die Darstellung des Strahlquerschnitts für ein erstes Simulationsbeispiel einer Entfernungsmessanordnung des Stands der Technik;

Fig.14    die Darstellung eines Tomogramms des empfangenen Signals für das erste Simulationsbeispiel;

Fig.15    die Darstellung des Strahlquerschnitts für ein zweites Simulationsbeispiel;

Fig.16    die Darstellung eines Tomogramms des empfangenen Signals für das zweite Simulationsbeispiel ohne Verzögerung;

Fig.17    die Darstellung des Tomogramms des empfangenen Signals für das zweite Simulationsbeispiel mit erfindungsgemässer Verzögerung;

Fig.18    die Darstellung des Strahlquerschnitts für ein drittes Simulationsbeispiel einer erfindungsgemässen Entfernungsmessanordnung mit optimierter Optik und

Fig.19    die Darstellung eines Tomogramms des empfangenen Signals für das dritte Simulationsbeispiel mit erfindungsgemässer Verzögerung.

Fig.1 zeigt die schematische Darstellung des erfindungsgemässen Grundprinzips der optischen Verzögerung eines Strahlungsanteils in einer interferometrischen Entfernungsmessanordnung. In einer solchen Anordnung zur Vermessung von industriellen Werkstücken wird durch eine frequenzmodulierten Laserquelle 1 ein Laserstrahl als Messstrahlung MS erzeugt, wobei eine Kohärenzlänge von mehr als 1 Millimeter, vorzugsweise von mehr als 60 Millimetern besitzt. In den zur Vermessung der Oberfläche des Werkstückes verwendeten optischen Strahlgang ist eine Verzögerungskomponente eingefügt, die zwei optische Koppler 2 aufweist, von denen einer als Strahlteiler für die Messstrahlung ausgestaltet ist, wobei diese in zwei Strahlungsanteile aufgeteilt wird.

Einer der beiden Strahlungsanteile wird unverzögert über die zu messende Distanz zum Ziel und wieder zurück zum Strahlungsdetektor geführt während der andere Anteil wenigstens ein optisches Verzögerungselement bzw. eine Verzögerungsstrecke 3 durchläuft, durch die einer der Strahlungsanteile gegenüber dem anderen Strahlungsanteil zeitlich so verzögert wird, dass die resultierende Verzögerung einer doppelten Laufzeit der Messstrahlung zu einer ausserhalb der Kohärenzlänge liegenden Distanz entspricht. Im Idealfall wird diese Distanz der zu vermessenden Entfernung zur Oberfläche des Werkstückes oder zu einem anderen Ziel entsprechen, kann aber auch hiervon abweichen. Erfindungsgemäss wird die Verzögerungsstrecke 3 jedoch so ausgelegt, dass die zeitliche Verzögerung zu einer Distanz korrespondiert, die innerhalb eines Entfernungsbereichs liegt, der zumindest teilweise auch mögliche Messdistanzen enthält, die grösser als die Kohärenzlänge sind. Erfindungsgemäss kann auch die untere Grenze des Distanzbereichs bereits ausserhalb der Kohärenzlänge liegen.

Somit wird erfindungsgemäss zu dem durchgestimmten Strahlungsfeld des Stands der Technik ein zweites Strahlungsfeld hinzugefügt, das gegenüber diesem verzögert ist. Auf dem Strahlungsdetektor werden beide Strahlungsfelder wieder überlagert, wobei das eine über die Verzögerungsstrecke geführt wurde. Anstelle des einen Signals der Anordnung des Stands der Technik werden nunmehr zwei Signale erzeugt, welche gegenseitig entsprechend der Verzögerungsstrecke verschoben sind und die sich im Messinterferometer ausbreiten.

Im Idealfall können beide durchlaufene Strecken, d.h. optische Länge der Verzögerungsstrecke und doppelte Distanz zum Ziel, identisch sein, so dass eine Synchronisierung der Strahlungsfelder auf dem Detektor auftritt. Im Normalfall genügt es jedoch, wenn die durch die Verzögerungsstrecke bewirkte Verzögerung zeitlich hinreichend nahe an der durch die Laufstrecke zum Ziel und wieder zurück verursachte Verzögerung liegt. Das maximale Ausmass der Differenz bzw. die notwendige zeitliche Nähe wird durch den Messbereich der Anordnung vorgegeben, d.h. die Messanordnung kann noch die Laufzeitdifferenzen bzw. optische Weglängendifferenzen bei der Messung verarbeiten, die innerhalb des Messbereichs liegen. Hierbei ist der Messbereich eine Funktion der Kohärenzlänge. Erfindungsgemäss wird somit der bereits in Anordnungen des Stands der Technik bestehende Messbereich in Richtung auf das Ziel verschoben, so dass ein anderer, zielseitig verlagerter Arbeitspunkt resultiert. Das maximale Ausmass der Verschiebung ist dabei im Prinzip nur durch die maximal realisierbare zeitliche Verzögerungsmöglichkeit, d.h. im Normalfall die optische Länge der Verzögerungsstrecke begrenzt. Letztlich wird durch die Verzögerungsstrecke die durch die Zielmessung bewirkte Verzögerung gegenüber dem in der Referenzstrecke des Referenzinterferometers als lokalem Oszillator laufenden Signal verringert, so dass eine im Vergleich zur unverzögerten Anordnung kleinere effektive Messdistanz resultiert. Die Bedingungen des Empfangs auf dem Strahlungsdetektor und somit das verwendete interferometrische Messprinzip mit seinem durch die Kohärenzlänge vorgegebenen Beschränkungen des Messbereichs bleiben somit grundsätzlich erhalten. Allerdings wird die Lage des Messbereichs im Raum verschoben, so dass bei unveränderten Kohärenzlänge und zielbedingten relativen Verhältnissen der Interferometer deren maximale Messdistanz um die Verzögerungsstrecke verändert wird.

In Fig.2 erfolgt die Darstellung eines ersten Ausführungsbeispiels einer Verzögerungsstrecke 3 mit fixer Länge für die erfindungsgemässe Entfernungsmessanordnung, wobei die optische Verzögerungsstrecke 3 in Mach-Zehnder-Konfiguration ausgebildet ist. Das von der Laserquelle 1 erzeugte Strahlungsfeld wird über einen Kollimator 4 geführt und durch einen ersten polarisierenden Strahlteiler 2' in zwei unterschiedlich polarisierte Strahlungsanteile aufteilt, wobei die optische Verbindung zwischen Laserquelle 1, Kollimator 4 und erstem Strahlteiler 2' bevorzugt in Faserbauweise mit einer polarisationserhaltenden Faser ausgeführt ist. In diesem Ausführungsbeispiel in Mach-Zehnder-Konfiguration wird ein π-polarisierter Strahlungsanteil 5 direkt weitergeführt, wohingegen der σ-polarisierte Strahlungsanteil 6 über das Interferometer mit einer Armlänge von ca. 10 cm und ein Umkehrprisma 8 geführt und schliesslich mit dem anderen Strahlungsanteil wieder kombiniert wird.

Als eine mögliche Ausgestaltungsvariante ist es vorteilhaft, eine Laserquelle 1 zu verwenden, die in einer Polarisationsmode emittiert, so dass zusammen mit der Verwendung einer polarisationserhaltenden Faser als Verbindung eine Einkopplung unter 45° in das Interferometer möglich ist, was wiederum eine gleichmässige Aufteilung in die beiden unterschiedlich polarisierten Strahlungsanteile ermöglicht. Alternativ oder ergänzend kann jedoch auch ein der Verzögerungsstrecke 3 vorgeschalteter Polarisations-Controller verwendet werden. Beide Strahlungsanteile 5 und 6 werden in einem zweiten polarisierenden Strahlteiler 2" wieder zusammen und über einen 45° Polarisator und einen Kollimator 4 weitergeführt, wobei auch hier die Verbindungen wiederum in Faserbauweise ausgeführt sein können. Um eine ausreichende Stabilität der Interferometer-Anordnung zu erreichen, können deren Wände 7 in Zerodur ausgeführt werden.

Die Wirkung der erfindungsgemässen optischen Verzögerungseinheit wird in Fig.3 erläutert, wobei die Feldstärke gegenüber der Zeit, d.h. in der Zeitdomäne, dargestellt wird. Die Laserquelle erzeugt ein Strahlungsfeld, dass in zwei Strahlungsanteile aufgeteilt wird, wobei $E(\nu,t)$ den unverzögerten Anteil und $E(\nu,t\text{-}\tau)$ den um $\tau=2\Delta L/C$ verzögerten Strahlungsanteil bezeichnen. Hierbei entspricht $\Delta L$ der Länge jeweils eines der beiden Arme des Mach-Zehnder-Interferometers der Verzögerungsstrecke und c der Lichtgeschwindigkeit. Beide Strahlungsanteile $E(\nu,t)$ und $E(\nu,t\text{-}\tau)$ propagieren dann gemeinsam und zeitversetzt durch die interferometrische Messanordnung.

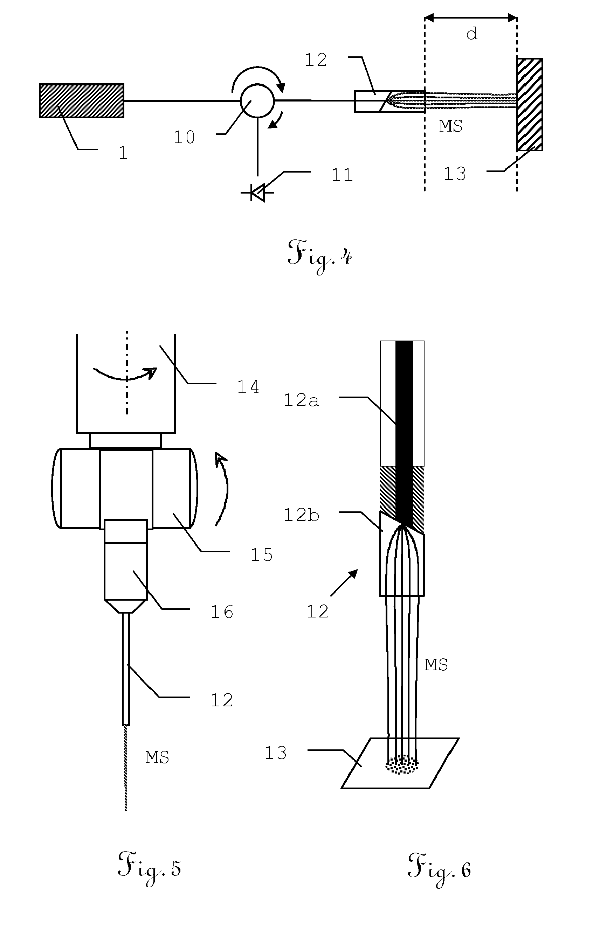

Fig.4 zeigt die schematische Darstellung der interferometrischen Messanordnung in einem Messgerät des Stands der Technik zur Vermessung von Oberflächen, wie es bspw. aus der WO 2009/036861 A1 bekannt ist. Eine solche Anordnung verwendet eine frequenzmodulierte Laserquelle 1 zur Erzeugung wenigstens eines Laserstrahls und einen Strahlungsdetektor 11 zum Empfang der von einer Oberfläche 13 zurückgestreuten Messstrahlung MS. Die frequenzmodulierte Laserquelle ist dabei vorzugsweise so ausgelegt, z.B. als Faserringlaser, dass sie eine Kohärenzlänge von mehr als 1 mm, insbesondere im Bereich von 1 Millimeter bis 20 Zentimeter aufweist, z.B. eine zentrale Wellenlänge zwischen 1,3 und 1,55 μm und einen durchstimmbaren Wellenlängenbereich von mehr als 40 nm bei einer dynamischen Linienbreite von unter 0,02 nm bei einer Kohärenzlänge von 60 mm oder mehr besitzt. Die Kohärenzlänge erlaubt somit auch Messungen über eine Tiefen- bzw. Entfernungsbereich von einigen Zentimetern.

Die von der Laserquelle 1 erzeugte Laserstrahlung wird über einen optischen Koppler 10 in den zur Messung verwendeten Interferometeraufbau, der in Common-Path-Geometrie ausgebildet ist, also einen teilweise gemeinsamen Interferometer-Strahlgang für Mess- und Referenzinterferometerarm aufweist, eingekoppelt. Der Referenzinterferometerarm wird hierbei durch einen Reflex an der optischen Austrittsfläche einer Gradientenindex-Linse definiert, so dass eine konstante, insbesondere bekannte Distanz festgelegt ist, wobei weitere Rückreflektionen vermieden werden. Damit liegt die Referenzfläche in einer die Komponenten der Sende- und Empfangsoptik integrierende Sende-/Empfangsoptik 12 innerhalb der zum Emittieren des Laserstrahls verwendeten Strahlformungsoptik. Der Messinterferometerarm wird hingegen durch die Reflektion an der zu vermessenden Oberfläche 13 definiert. Das rückreflektierte Licht von Mess- und Referenzinterferometerarm wird schliesslich über den optischen Koppler 10 wieder auf den Strahlungsdetektor 11 geführt, der vorzugsweise als InGaAs-Detektor mit einer Bandbreite von mehr als 100 MHz ausgebildet ist. In einer Auswerteeinheit kann schliesslich die zu messende Distanz $\Delta L$ bestimmt werden.

Zusätzlich kann auch ein hier nicht dargestelltes Kalibrierinterferometer mit einem optischen Detektor 5 zur Berücksichtigung bzw. Kompensation von Nichtlinearitäten im Durchstimmverhalten verwendet werden, wobei dieses Kalibrierinterferometer insbesondere in Etalon- oder Mach-Zehnder-Konfiguration ausgeführt sein kann.

Eine solche Messanordnung kann bspw. in einen Probenkopf eines Koordinatenmessgerätes zur abtastenden Vermessung integriert sein, wie es bspw. aus der WO 2009/036861 A1 bekannt ist. In der Fig.5 wird der strukturellen Aufbau eines solchen Probenkopfs für ein ebensolches Messgerät veranschaulicht. Das Koordinatenmessgerät weist hierbei Führungsmitteln zur definiert abtastenden Führung des Probenkopfes über die zu vermessende Oberfläche und der Probenkopf wenigstens einen Emissions- und Empfangsstrahlgang zur Emission der Messstrahlung MS der interferometrischen Entfernungsmessanordnung auf.

Der Probenkopf wird durch ein Armelement 14 und ein Gelenk 15 als Führungsmittel definiert abtastend über die zu vermessende Oberfläche geführt, wobei auch eine Rotation des Gelenks 15 gegenüber dem Armelement 14 möglich ist. Durch die Rotierbarkeit gegenüber dem Armelement 14 und das nachfolgende Gelenk 15 kann der Probenkopf gewinkelten oder stark veränderlichen Oberflächenverläufen gut folgen. Grundsätzlich können jedoch noch weitere rotatorische oder translatorische Freiheitsgrade in die Führungsmittel integriert werden, um eine weiter verbesserte Führung des Probenkopfes zu ermöglichen.

Der Probenkopf weist wenigstens einen oberflächenseitigen Emissions- und Empfangsstrahlengang des Messstrahls MS auf. In dieser Ausführungsform werden die Strahlengänge durch eine dünne Röhre geführt, welche die Sende-/Empfangsoptik 12 beinhaltet. Im an diese Röhre anschliessenden dickeren Teil 16 kann bereits der Strahlungsdetektor selbst oder aber Lichtleiter zur Weiterleitung an einen andernorts integrierten Strahlungsdetektor angeordnet sein. Der Probenkopf wird durch die Führungsmittel so gesteuert, dass die Bedingung eines im wesentlichen senkrechten Auftreffens des Laserstrahls auf die Oberfläche eingehalten wird, insbesondere eine Abweichung von +/- 5° zur Flächennormalen nicht überschritten wird. Dabei kann der Probenkopf so bewegt werden, dass dieser kontinuierlich mit relativ zur Oberflächentangente konstanter Ausrichtung verfahren wird, insbesondere mit senkrecht zur Oberflächentangente orientiertem Emissions- und Empfangsstrahlgang.

Fig.6 zeigt schematisch die Integration von Sende-/Empfangsoptik 12 in die Röhre des Probenkopfes. In dieser Ausgestaltung dient eine Faser 12a zur Führung der zu emittierenden wie auch der reflektierten Messstrahlung MS. Die Emission erfolgt hierbei durch eine in dem röhrenförmigen Teil angeordnete Gradientenindex-Linse 12b, die die Messstrahlung auf die zu vermessende Oberfläche 13 emittiert und die von dort reflektierte Messstrahlung MS wieder in die Faser 12a einkoppelt.

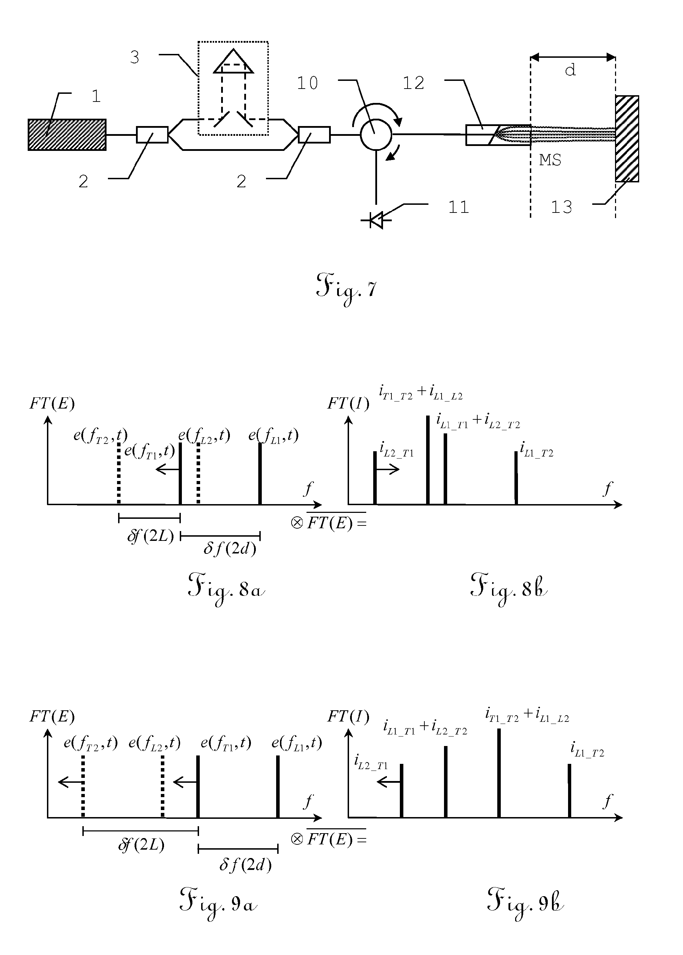

Fig.7 zeigt die Integration einer Verzögerungsstrecke in die Anordnung aus Fig.4 zur Realisierung eines ersten Ausführungsbeispiels der erfindungsgemässen interferometrischen Messanordnung. Hinter die Laserquelle 1 und einen ersten Strahlteiler 2 für die Messstrahlung, der diese in zwei Strahlungsanteile aufteilt wird wenigstens eine optische Verzögerungstrecke 3 eingefügt, durch die einer der Strahlungsanteile gegenüber dem anderen Strahlungsanteil zeitlich so verzögerbar ist, dass die erzeugbare Verzögerung einer doppelten Laufzeit der Messstrahlung MS zu einer ausserhalb der Kohärenzlänge liegenden Distanz entspricht, wobei diese der zu messende Distanz d zur Oberfläche des Ziels 13 entsprechen kann. Durch die erfindungsgemässe Verwendung der Verzögerungsstrecke 3 können nun auch Messungen zu Zielen durchgeführt werden, deren Abstand zur Messanordnung ausserhalb der durch die Kohärenzlänge gesetzten Grenzen, insbesondere aber grösser als die Kohärenzlänge ist.

In diesem ersten Ausführungsbeispiel ist die Verzögerungsstrecke 3 im Strahlgang vor der Sende-/Empfangsoptik 12 angeordnet, so dass das Verzögern vor dem Emittieren erfolgt.

Auch dieses erste Ausführungsbeispiel kann in der interferometrischen Entfernungsmessanordnung ein weiteres Interferometer als Kalibrierinterferometer aufweisen, wobei dieses auch in Etalon- oder Mach-Zehnder-Konfiguration ausgeführt sein kann.

Die Fig.8a-b und Fig.9a-b veranschaulichen die Strahlungsfelder in der Frequenzdomäne für ein erstes und ein zweites Beispiel der Länge der Verzögerungsstrecke in der Anordnung des ersten Ausführungsbeispiels.

Fig.8a-b zeigt die graphische Darstellung in der Frequenzdomäne für ein erstes Beispiel, wobei durch die Verwendung von Mess- und Referenzinterferometerarm und durch die zwei Strahlungsanteile insgesamt vier Strahlungsfelder erzeugt werden, welche beim interferometrischen Entfernungsmessen auf dem Strahlungsdetektor überlagert werden.

Die Reflexe des Referenzarms als lokalem Oszillator und des Ziels im Messarm sind gegeneinander um die Laufzeit über die Zieldistanz d verzögert. Da zwei Strahlungsanteile in die interferometrische Messanordnung mit dem Referenz- und dem Messarm eingekoppelt werden, resultieren somit insgesamt vier auf dem Strahlungsdetektor interferierende Strahlungsfelder, wobei in den Figuren die nichtverzögerten Strahlungsfelder mit 1 und die verzögerten Strahlungsfelder mit 2 sowie mit L für den lokalen Oszillator (Referenzarm) und mit T für das Target (Messarm) indiziert werden. Aufgrund der Frequenzmodulation der Laserstrahlung entspricht hierbei ein zeitlicher Abstand bzw. eine Laufstreckendifferenz auch einer spektralen Differenz $\delta f$.

Die detektierte Intensität I ist ein Produkt der Strahlungsfelder in der Zeit- oder Frequenzdomäne, die Fourier-Transformation FT der Intensität I ist eine Faltung der Fourier-Transformation FT der Felder E.

$$I = \left| E \right|^2 = E(t) \cdot \overline{E(t)}$$

$$FT(I) = FT(E) \otimes \overline{FT(E)}$$

*mit*

$$E(t) = E_{L1}(t) + E_{L2}(t - \tau_{MZ}) + E_{T1}(t - \tau_{T}) + E_{T2}(t - \tau_{T} - \tau_{MZ})$$

Hierbei bezeichnen $E_{L1}(t)$ den nicht verzögerten und nur über die Referenzstrecke gelaufenen Strahlungsanteil, $E_{L2}(t - \tau_{MZ})$ den verzögerten und nur über die Referenzstrecke gelaufenen Strahlungsanteil, $E_{T1}(t - \tau_{T})$ den nicht verzögerten und über die Zieldistanz gelaufenen Strahlungsanteil und schliesslich $E_{T2}(t - \tau_{T} - \tau_{MZ})$ den sowohl verzögerten als auch über die Zieldistanz gelaufenen Strahlungsanteil. Hierbei stellt $\tau_{MZ}$ die Laufzeit der über die Verzögerungsstrecke geführten Strahlungsanteile und $\tau_{T}$ die Laufzeit der über die Zieldistanz gelaufenen Strahlungsanteile dar. Die spektralen Abstände $\delta f(2L)$ und $\delta f(2d)$ sind dabei als Funktionen der optischen Pfaddifferenzen L und d darstellbar.

In der graphischen Darstellung in der Frequenzdomäne der Fig.8a ergeben sich somit vier Frequenzen der vier Strahlungsanteile bzw. Strahlungsfelder, aus denen nach der Faltung die vier in Fig.8b gezeigten Schwebungsfrequenzen folgen. Hierbei interferiert das verzögerte Strahlungsfeld mit dem nicht verzögerten Feld, so dass eine durch den Pfeil in Fig.8a angedeutete Vergrösserung der Zieldistanz bzw. des korrespondierenden spektralen Abstands $\delta f(2d)$ zu einer Veränderung der Frequenz $e(f_{T1}, t)$ und damit zu der in Fig.8b gezeigten Verschiebung der Schwebungsfrequenz $i_{L2\_T1}$ führt.

Für eine Frequenzmodulation mit einem Anstieg der optischen Frequenz f besitzt der erste unverzögerte Reflex die höchste Frequenz $e(f_{L1}, t)$ zur Zeit t. Nach der Faltung weist der Interferenzterm der beiden L-Felder die höchste Intensität auf, wird aber aufgrund deren Lage ausserhalb des Kohärenzbereichs unterdrückt. Die niedrigste Schwebungsfrequenzkomponente $i_{L2\_T1}$ der Interferenz der Strahlungsfelder $e(f_{T1}, t)$ und $e(f_{L2}, t)$ stellt hingegen das gewünschte Nutzsignal dar.

Fig.9a-b zeigt die graphische Darstellung in der Frequenzdomäne für ein zweites Beispiel der Strahlungsfelder für das erste Ausführungsbeispiel, bei dem die durch die Verzögerungskomponente bewirkte Verzögerung grösser gewählt wird als die Laufzeit über die Zielstrecke bzw. grösser als die doppelte Laufzeit der Messstrahlung zu der zu vermessenden Oberfläche ist.

In diesem Fall führt die in Fig.9a gezeigte Vergrösserung der Zieldistanz d bzw. des korrespondierenden spektralen Abstands $\delta f(2d)$ zu einer Verringerung der Schwebungsfrequenz für $i_{L2\_T1}$ in Fig.9b. Eine solche Verschiebung kann Vorteile bieten, da hierbei auch die Schwebungen $i_{L1\_T2}$ und $i_{T1\_T2} + i_{L1\_L2}$ zu höheren Frequenzen verschoben sind und somit kohärenzbedingt stärker unterdrückt werden können.

Allgemein werden durch Verschieben des Arbeitsbereichs ausserhalb der normalen Kohärenzlänge beide Seiten der Kohärenzlänge mit Ausnahme einer Gleichstromregion nutzbar. Allerdings geht die Eindeutigkeit verloren und es muss Sorge getragen werden, dass die richtige Seite der Arbeitsdistanz gewählt wird.

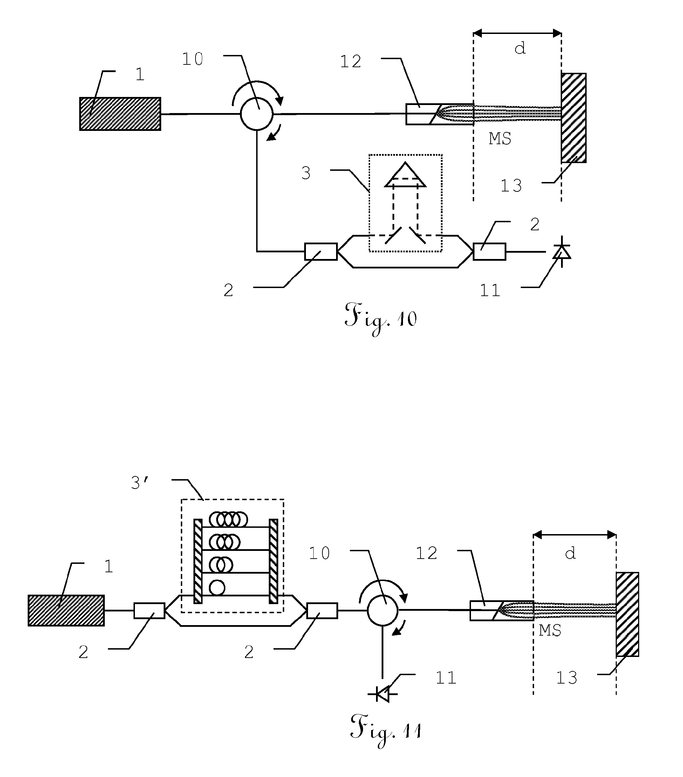

Fig.10 zeigt die schematische Darstellung eines zweiten Ausführungsbeispiels der erfindungsgemässen interferometrischen Messanordnung, bei der bei dem in eine Anordnung gem. Fig.4 die Verzögerungsstrecke 3 im Strahlgang nach der integrierten Sende-/Empfangsoptik 12 eingefügt ist, so dass das Aufteilen in die Strahlungsanteile mit Verzögern eines der Teile erst nach dem Empfangen und unmittelbar vor dem Strahlungsdetektor 11 erfolgt. Erfindungsgemäss kann die gesamte Verzögerung jedoch auch durch verschiedene Teilverzögerungsstrecken bewirkt werden, die auch an verschiedenen Stellen des Strahlgangs angeordnet sein können, sofern sich für einen Strahlungsanteil die gewünschte Gesamtverzögerung bzw. optische Pfaddifferenz ergibt.

Ein drittes Ausführungsbeispiel einer erfindungsgemässen interferometrischen Messanordnung wird in Fig.11 schematisch dargestellt. Während im ersten und zweiten Ausführungsbeispiel feste Verzögerungsstrecken einer definierten Länge verwendet werden, wird in diesem Fall bei ansonsten zum ersten Ausführungsbeispiel gem. Fig.7 unverändertem Aufbau eine umschaltbare Zahl von Verzögerungsstrecken unterschiedlicher Länge verwendet, so dass eine Mehrzahl von auswählbaren diskreten Verzögerungszeiten bereitgestellt wird. Von Vorteil bei der Kalibrierung der einzelnen Verzögerungsstrecken kann ein gewisser Überlapp zwischen den Verzögerungsstrecken in Verbindung mit der möglichen Kohärenzlänge sein. Hierbei ist der Längenunterschied zwischen den Verzögerungsstrecken etwas kleiner als die Kohärenzlänge, wodurch es zu einem Messbereichüberlapp kommt. Beim Verlassen des einen Bereichs gelangt man durch Umschalten auf die nächste Verzögerungslänge auch in den nächsten Bereich. Die gleiche Distanz kann dann mit zwei Verzögerungsstrecken gemessen werden, was eine Übernahme einer Distanzkalibration erlaubt. Die Verzögerungsstrecken können hierbei als Fasern ausgebildet sein, wie sie als Standardkomponenten für Anwendungen der optischen Kohärenztomographie erhältlich sind. So bieten bspw. die Hersteller General Photonics, Newport, OZoptics und Santec als Standardprodukt fasergekoppelte optische Verzögerungsstrecken mit Verzögerungszeiten von bis zu 350 ps bzw. einer Länge von 110 mm an.

Alternativ zu umschaltbaren Verzögerungsstrecken können auch erfindungsgemäss kontinuierlich oder diskret verstellbare Varianten von Verzögerungsstrecken, bspw. Interferometer mit verstellbaren Armlängen, zum Einsatz kommen.

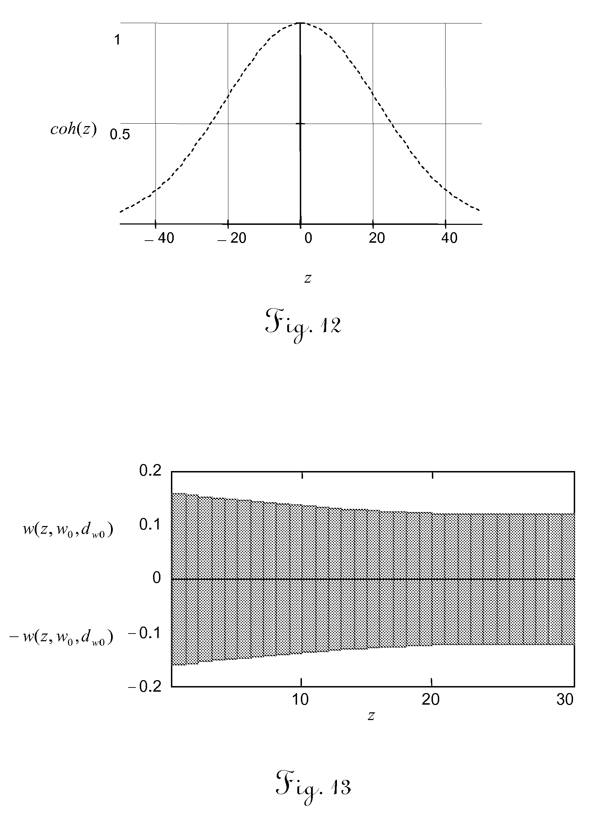

Die Wirkung einer Verzögerungsstrecke auf Messungen wird in den nachfolgenden Figuren 12 bis 19 anhand von einfachen Simulationsergebnissen veranschaulicht. Hierbei zeigt Fig.12 die Darstellung einer Kohärenzkurve für die nachfolgenden Simulationen, welche Signalstärken und Kohärenzeffekte veranschaulichen. Die zugrundeliegende Kohärenzkurve ist dabei wie folgt definiert

$$coh(z) = e^{-\left(\frac{2z \cdot \sqrt{\ln(2)}}{L_{coh}}\right)^2}$$

mit z als optischer Pfaddifferenz und einer Kohärenzlänge von $L_{coh} := 50mm$.

Für die Simulationen gelten die folgenden Definitionen und Beziehungen

Zeitliche Verzögerung:
$$\tau(d) := \frac{2d}{c}$$

Phase:
$$\phi(t,\tau) := \pi \cdot \nu(t-\tau) \cdot (t-\tau)$$

Laser-Amplitude:
$$E_{Laser\_0} := 1$$

Laser-Feld:
$$E_{Laser}(t,d) := E_{Laser\_0} \cdot e^{i \cdot \phi(t,\tau(d))}$$

Lokaler Oszillator

- Länge:
$$d_L := 0m$$

- Reflektivität:
$$R := 1\%$$

- Oszillator-Laser-Feld:
$$E_L(t) := E_{Laser}(t,d_L) \cdot \sqrt{R}$$

Ziel-Laser-Feld:
$$E_T(t) := E_{Laser}(t,d_T) \cdot \sqrt{R \cdot L}$$

Strahlungsdetektor-Feld:
$$E := \left(E_L(t) + E_T(t)\right)$$

Fig.13 zeigt den Strahlquerschnitt für ein erstes Simulationsbeispiel einer Entfernungsmessanordnung des Stands der Technik ohne Verzögerungsstrecke.

Die Parameter für dieses Beispiel mit einer Zieldistanz von 30 mm und einer daraus resultierenden optischen Pfaddifferenz von 60 mm lauten wie folgt:

Strahltaille:
$$w_0 := 120\mu m$$

Distanz bis zur Strahltaille:
$$d_{w_0} := 25mm$$

Numerische Apertur:
$$NA := \frac{w_0}{z_0(w_0)} = 0,00411$$

(fortgesetzt)

Austrittspupille:

$$D := w\left(0, w_0, d_{w_0}\right) \cdot 2 = 0{,}316mm$$

Rayleigh-Länge:

$$z_0\left(w_0\right) = 29{,}2mm$$

Zielverlust:

$$RL := NA^2 \cdot Albedo$$

und einem aus dem Zielverlust resultierenden Leistungspegel von -58 dBm, wobei die Albedo einer als Ziel angenommenen dunklen Metalloberfläche mit 10% angesetzt wird. Distanz z (horizontal) und Strahlquerschnitt (vertikal) sind jeweils in Millimeter angegeben.

Der Einfachheit halber wird zur Veranschaulichung des Kohärenzeinflusses dieser als Modulationsverlust im Fourier-Raum angewendet, d.h. die Fouriertransformierte $P'=FT(_p)$ der detektierten Leistung $p=(E \cdot \overline{E})$ wird mit der Kohärenzfunktion multipliziert $P=P' \cdot coh$. Die Distanz d bzw. die optische Pfaddifferenz ($OPD_T \approx 2 \cdot d$ in Luft) korrespondiert zur Frequenz f über die Beziehung $OPD_T = \dfrac{c \cdot f}{\gamma}$ mit der spektralen Durchstimmrate $\gamma$ des Lasers von

$$\gamma = 20 \tfrac{THZ}{ms} \; .$$

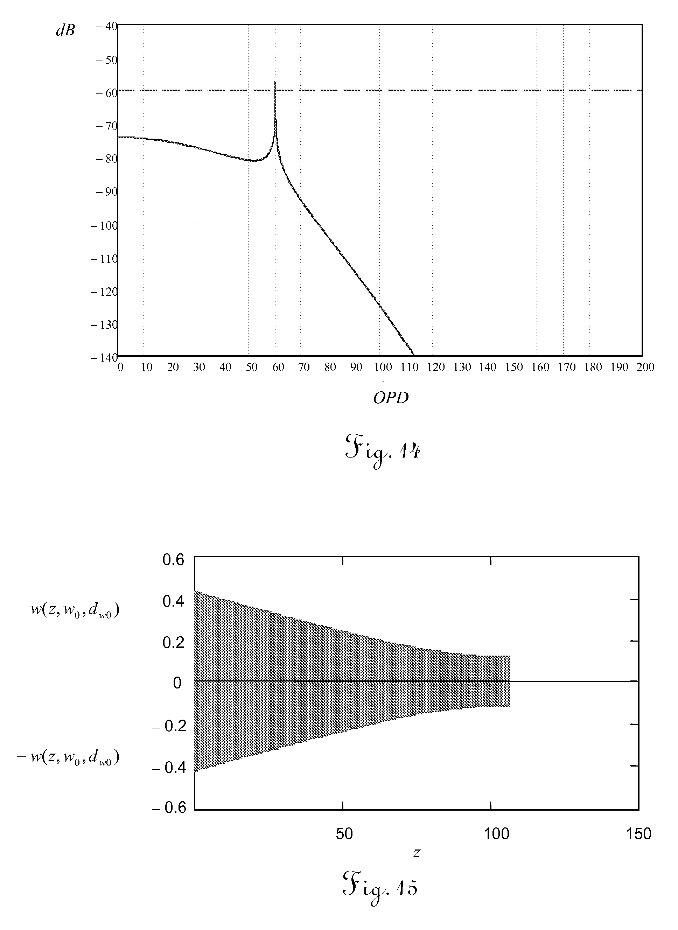

Das zugehörige Tomogramm des empfangenen Signals für das erste Simulationsbeispiel wird in Fig.14 dargestellt, wobei der Leistungspegel in dB gegen die in Millimetern angegebene optische Pfaddifferenz d aufgetragen ist. In der Realität wird ab einer Distanz von 30 mm aufgrund von Kohärenzverlusten und Rauschen die Detektionsgrenze erreicht. Deshalb sollte in der diese Einflüsse nicht berücksichtigenden Simulation die benötigte Signalstärke oberhalb der gestrichelt dargestellten Schwelle von -60 dB liegen, so dass die in der Realität herrschenden Bedingungen berücksichtigt werden können.

Wie in der Abbildung zu erkennen ist, erreicht die durchgezogen gezeichnete Signalstärke ohne erfindungsgemässe Verzögerung bei einer optischen Pfaddifferenz von 60 mm bzw. einer Zieldistanz von 30 mm ihr Maximum und liegt damit leicht oberhalb der Sensitivität von ca. -60 dB.

Fig.15 zeigt die Darstellung des Strahlquerschnitts für ein zweites Simulationsbeispiel. Nunmehr beträgt die Zieldistanz 10 cm, so dass eine optische Pfaddifferenz (OPD) von 200 mm folgt. Die numerische Apertur entspricht dem ersten Simulationsbeispiel aus Fig.13. Die Distanz zur Strahltaille beträgt 100 mm, so dass die Austrittspupille einen Durchmesser von 0,857 mm hat.

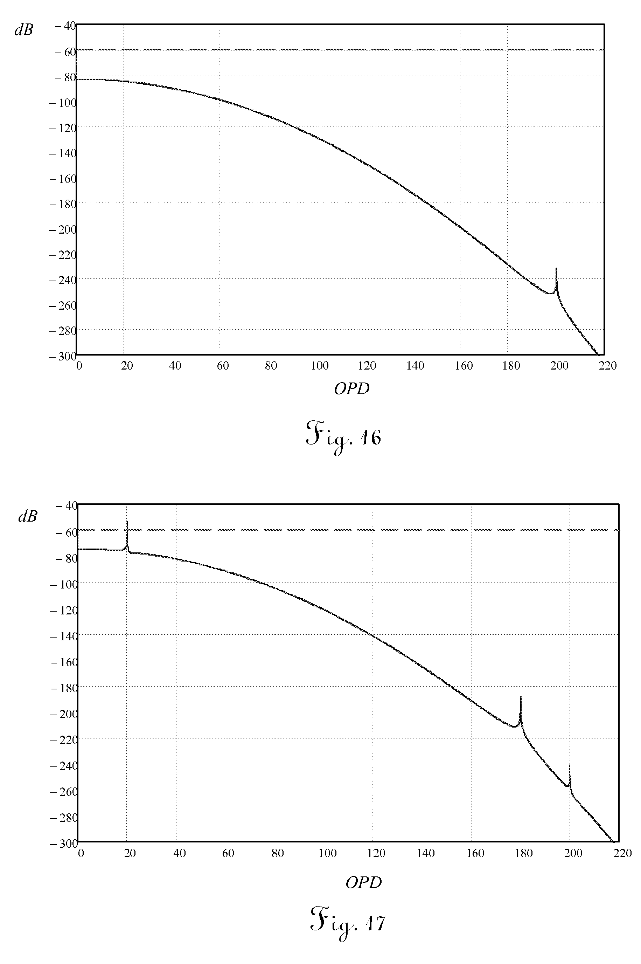

Wie aus dem in Fig.16 dargestellten zugehörigen Tomogramm des empfangenen Signals zu erkennen ist, liegt das Maximum der Signalstärke deutlich unter der für realistische Verhältnisse anzusetzenden Schwelle von -60 dB und ist somit weit jenseits einer Detektierbarkeit.

Demgegenüber stehen die Ergebnisse einer Simulation mit erfindungsgemässer Einführung einer Verzögerung, wie sie in Fig.17 für das zweite Simulationsbeispiel dargestellt werden.

Bei der Wahl der optischen Pfaddifferenz der Verzögerungsstrecke $OPD_{MZ}$ wird durch die Kohärenzlänge des Lasers ein möglicher Bereich vorgegeben. Für eine gute Signalauswertung ohne Verzögerung sollte die Distanz bzw. deren $OPD_T$ im Bereich der Kohärenzlänge liegen:

$$0 < OPD_T < L_{coh}$$

Bei Verwendung einer Verzögerungstrecke verschiebt sich dieser Bereich um die $OPD_{MZ}$ dieser Strecke:

$$OPD_{MZ} < OPD_T < L_{coh} + OPD_{MZ}$$

Die minimale Verzögerungsstrecke ist dabei

$$OPD_{MZ\,min} = OPD_T - L_{coh} \; ,$$

und die maximale ist

$$OPD_{MZ\,max} = OPD_T \; ,$$

so dass sich für die Wahl der Länge der Verzögerungsstrecke der mögliche Bereich von

$$OPD_{MZ\,min} < OPD_{MZ} < OPD_{MZ\,max}$$

$$OPD_T - L_{coh} < OPD_{MZ} < OPD_T$$

ergibt.

In diesem auch durch die Fig.8 beschriebenen Fall führt eine Vergrößerung der Zieldistanz zu einer Vergrößerung der gemessenen Schwebungsfrequenz, was dem sogenannten "normalen" Messbereich entspricht. Möglich ist auch die Nutzung des anderen Bereichs, entsprechend Fig. 9, bei dem die Verzögerungsstrecke größer ist als die OPD der Distanz und die Vergrößerung der Zieldistanz zu einem Abnehmen der Schwebungsfrequenz führt, dem sogenannten "inversen" Messbereich:

$$OPD_T < OPD_{MZ} < OPD_T + L_{coh}$$

Sofern die Eindeutigkeit des Messbereichs - normal oder inverse - beispielsweise durch ein Verfahren des Ziels bestimmbar ist, kann die Verzögerungsdistanz in beiden Bereichen liegen:

$$OPD_T - L_{coh} < OPD_{MZ} < OPD_T + L_{coh}$$

In dem vorher genannten Beispiel mit

$$d = 100 \; mm \rightarrow OPD_T = 200 \; mm \; und \; L_{coh} = 50 \; mm \; ,$$

und der Beschränkung auf den normalen Messbereich, muss die Verzögerungsstrecke im Bereich

$$150 \; mm < OPD_{MZ} < 200 \; mm$$

liegen.

Bei Verwendung einer Verzögerungsstrecke besteht das Laser-Feld aus zwei Termen, wobei diese gegenseitig verzögert sind und $d_{MZ}$ die Länge der erfindungsgemässen Verzögerungsstrecke bezeichnet (in Luft gilt

$$d_{MZ} \simeq \frac{OPD_{MZ}}{2} )$$

$$E_{Laser}(t,d) := \frac{1}{4} E_{Laser\_0} \cdot e^{i \cdot \phi(t,\tau(d))} + \frac{1}{4} E_{Laser\_0} \cdot e^{i \cdot \phi(t,\tau(d+d_{MZ}))}$$

Die durch die Aufteilung und Zusammenführung des Strahlungsfeldes erzeugten Verluste werden durch den Faktor ¼ berücksichtigt. Wiederum beträgt die Zieldistanz 10 cm und somit die optische Pfaddifferenz (OPD$_T$) 200 mm. Zur Bewirkung einer Verzögerung wird für einen der beiden Strahlungsanteile eine zusätzliche Strecke der Länge von z.B. d$_{MZ}$ = 90 mm (OPD = 180 mm) eingeführt, die innerhalb des möglichen normalen Bereichs liegt.

Im Tomogramm sind nunmehr die Auswirkungen von drei der vier entstehenden Schwebungsfrequenzen identifizierbar. Bei 200 mm ist das normale, dem Ziel zuordenbare Signal erkennbar, wohingegen bei 180 mm das zur Verzögerungsstrecke gehörige Signal auftritt. Bei 20 mm ist das Interferenzsignal von verzögertem lokalen Oszillator- und unverzögertem Messinterferometer-Strahlungsfeld, d.h. des das Ziel umfassenden Interferometerarms, erkennbar.

Das bei 380 mm liegende Interferenzsignal aus verzögertem lokalen Oszillator- und verzögertem Messinterferometer-Strahlungsfeld ist in der Figur aus Gründen der Anschaulichkeit nicht dargestellt.

Das Signal bei 20 mm ist, trotz des zusätzlichen durch die Verzögerungsstrecke bewirkten Verlustes von 6 dB, noch oberhalb der Sensitivitätsschwelle und damit gut detektierbar.

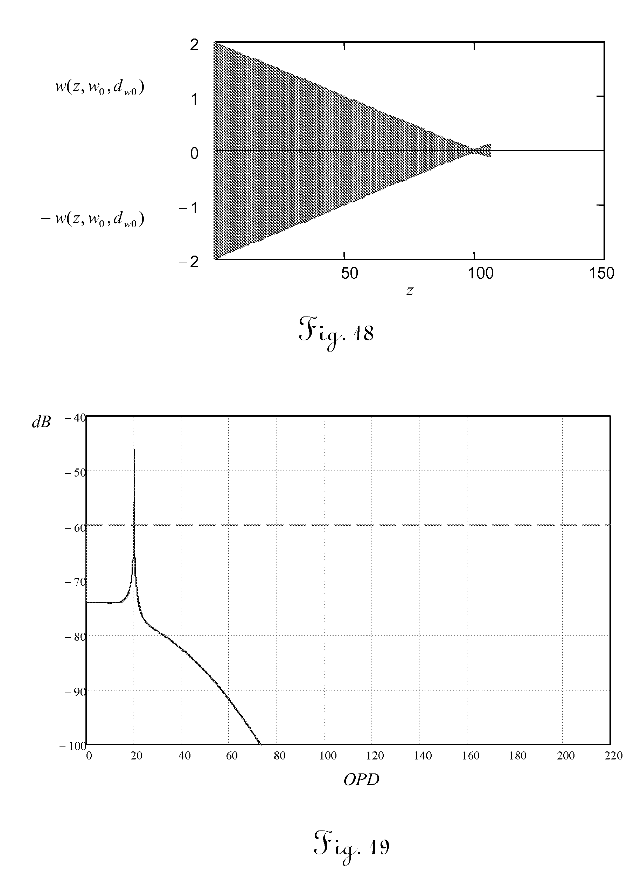

Fig.18 zeigt die Darstellung des Strahlquerschnitts für ein drittes Simulationsbeispiel einer erfindungsgemässen Entfernungsmessanordnung mit einer auf eine Zieldistanz von 100 mm optimierten Optik. Für dieses Simulationsbeispiel gelten folgende Parameter

Strahltaille:

$$w_0 := 25\,\mu m$$

Distanz bis zur Strahltaille:

$$d_{w_0} := 100\,mm$$

Numerische Apertur:

$$NA := \frac{w_0}{z_0(w_0)} = 0{,}01974$$

Rayleigh-Länge:

$$z_0(w_0) = 1{,}267\,mm$$

Austrittspupille:

$$D := w(0, w_0, d_{w_0}) \cdot 2 = 3{,}947\,mm$$

Die Albedo einer als Ziel angenommenen dunklen Metalloberfläche wird in diesem Beispiel mit 10% angesetzt, so dass ein aus dem Zielverlust resultierender Leistungspegel von -44 dBm folgt. Damit kann die numerische Apertur um den Faktor 5 vergrössert und die Verluste um 7 dBm verringert werden, was eine entsprechend höhere Signalstärke bedeutet.

Das zugehörige Tomogramm des empfangenen Signals wird in Fig.19 für das dritte Simulationsbeispiel mit erfindungsgemässer Verzögerung dargstellt. Das deutliche Überschreiten der Detektierbarkeitsschwelle bei 20 mm ist klar zu erkennen.


**Patentansprüche**

1.  Entfernungsmessverfahren zur Vermessung von Oberflächen (13), insbesondere von industriellen Werkstücken, mit wenigstens einem

    - Erzeugen eines frequenzmodulierten Laserstrahls zur Bereitstellung von Messstrahlung (MS) mit einer Kohärenzlänge, insbesondere einer Kohärenzlänge von mehr als 1 Millimeter, vorzugsweise von mehr als 60 Millimetern,
    - Emittieren der Messstrahlung (MS) auf die sich innerhalb eines vorgegebenen Distanzbereichs befindende Oberfläche (13),
    - Empfangen der von der Oberfläche (13) zurückgestreuten Messstrahlung (MS) und
    - interferometrischen Entfernungsmessen von einem Bezugspunkt zur Oberfläche (13) unter Verwendung von einem Mess- und einem Referenzinterferometerarm,
    insbesondere wobei die Messstrahlung (MS) während eines abtastenden Führens über die zu vermessende Oberfläche (13) emittiert und wieder empfangen wird und beim interferometrischen Entfernungsmessen Mess- und Referenzinterferometerarm einen teilweise gemeinsamen Strahlgang aufweisen, vorzugsweise mit einer den Referenzinterferometerarm definierenden und innerhalb einer zum Emittieren des Laserstrahls verwendeten Strahlformungsoptik liegenden Referenzfläche,
**dadurch gekennzeichnet, dass**
- der vorgegebene Distanzbereich zumindest teilweise, insbesondere vollständig ausserhalb der Kohärenzlänge liegt und
- die Messstrahlung in zwei Strahlungsanteile (5, 6) aufgeteilt wird, wobei einer der Strahlungsanteile (6) gegenüber dem anderen zeitlich so verzögert wird, dass eine hierdurch bewirkte optische Pfaddifferenz der zu einer Entfernung im vorgegebenen Distanzbereich korrespondierenden optischen Pfaddifferenz zu- oder abzüglich der Kohärenzlänge des Lasers entspricht.

2. Entfernungsmessverfahren nach Anspruch 1,
   **dadurch gekennzeichnet, dass**
   die durch die Verzögerung bewirkte optische Pfaddifferenz

   - höchstens der zur Distanz zu der zu vermessenden Oberfläche (13) korrespondierenden optischen Pfaddifferenz und
   - wenigstens der zur Distanz zu der zu vermessenden Oberfläche (13) korrespondierenden optischen Pfaddifferenz abzüglich der Kohärenzlänge des Lasers entspricht.

3. Entfernungsmessverfahren nach Anspruch 1 oder 2,
   **dadurch gekennzeichnet, dass**
   die durch die Verzögerung bewirkte optische Pfaddifferenz

   - wenigstens der zur Distanz zu der zu vermessenden Oberfläche (13) korrespondierenden optischen Pfaddifferenz und
   - höchstens der zur Distanz zu der zu vermessenden Oberfläche (13) korrespondierenden optischen Pfaddifferenz zuzüglich der Kohärenzlänge des Lasers entspricht.

4. Entfernungsmessverfahren nach einem der Ansprüche 1 bis 3,
   **dadurch gekennzeichnet, dass**
   das Verzögern vor dem Emittieren der Messstrahlung (MS) auf die zu vermessenden Oberfläche (13) erfolgt.

5. Entfernungsmessverfahren nach einem der Ansprüche 1 bis 3,
   **dadurch gekennzeichnet, dass**
   das Verzögern nach dem Empfangen der von der zu vermessenden Oberfläche (13) zurückgestreuten Messstrahlung (MS) erfolgt.

6. Entfernungsmessverfahren nach einem der vorangehenden Ansprüche,
   **dadurch gekennzeichnet, dass**
   eine Mehrzahl von auswählbaren diskreten Verzögerungszeiten bereitgestellt wird.

7. Entfernungsmessverfahren nach einem der vorangehenden Ansprüche,
   **dadurch gekennzeichnet, dass**
   durch die Verwendung von Mess- und Referenzinterferometerarm und durch die zwei Strahlungsanteile (5, 6) insgesamt vier Strahlungsfelder erzeugt werden, welche beim interferometrischen Entfernungsmessen überlagert werden.

8. Interferometrische Entfernungsmessanordnung zur Vermessung von Oberflächen (13), insbesondere von industriellen Werkstücken, mit wenigstens

   - einer frequenzmodulierten Laserquelle (1) zur Erzeugung wenigstens eines Laserstrahls zur Bereitstellung von Messstrahlung (MS) mit einer Kohärenzlänge, insbesondere mit einer Kohärenzlänge von mehr als 1 Millimeter, vorzugsweise von mehr als 60 Millimetern,
   - einem optischen Strahlgang mit

     o einer Sendeoptik zum Emittieren der Messstrahlung (MS) auf die Oberfläche,
     o einer Empfangsoptik zum Empfangen der von der Oberfläche zurückgestreuten Messstrahlung (MS), insbesondere einer kombinierten Sende- und Empfangsoptik (12),
     o einem Messinterferometerarm und einem Referenzinterferometerarm, insbesondere mit einem teilweise gemeinsamen Strahlgang von Mess- und Referenzinterferometerarm,

- einem Strahlungsdetektor (11) zum Empfang der von der Oberfläche (13) zurückgestreuten Messstrahlung (MS), insbesondere einem InGaAs-Detektor mit einer Bandbreite von mehr als 100 MHz,
- einer Auswerteinheit zur Bestimmung der Entfernung von einem Bezugspunkt der Entfernungsmessanordnung zur Oberfläche (13),
**gekennzeichnet durch**
- wenigstens einen Strahlteiler (4) für die Messstrahlung, der diese in zwei Strahlungsanteile (5, 6) aufteilt und
- wenigstens eine optische Verzögerungstrecke (3, 3'), **durch** die einer der Strahlungsanteile (6) gegenüber dem anderen Strahlungsanteil (5) zeitlich so verzögerbar ist, dass eine hierdurch bewirkte optische Pfaddifferenz der zu einer Entfernung im vorgegebenen Distanzbereich korrespondierenden optischen Pfaddifferenz zu- oder abzüglich der Kohärenzlänge des Lasers entspricht.

9. Entfernungsmessanordnung nach Anspruch 8,
**dadurch gekennzeichnet, dass**
die optische Verzögerungsstrecke (3) in Mach-Zehnder-Konfiguration ausgebildet ist, insbesondere mit optischen Verbindungen in Faserbauweise.

10. Entfernungsmessanordnung nach Anspruch 8 oder 9,
**dadurch gekennzeichnet, dass**
der Strahlteiler (4) die Messstrahlung in zwei unterschiedlich polarisierte Strahlungsanteile (5, 6) aufteilt.

11. Entfernungsmessanordnung nach einem der vorangehenden Ansprüche 8 bis 10,
**dadurch gekennzeichnet, dass**
die Verzögerungsstrecke

- kontinuierlich verstellbar oder
- aus einer Mehrzahl von Verzögerungsstrecken unterschiedlicher Länge auswählbar ist, insbesondere umschaltbar ist, insbesondere wobei die Verzögerungsstrecken durch optische Fasern unterschiedlicher Länge ausgebildet sind.

12. Entfernungsmessanordnung nach einem der vorangehenden Ansprüche 8 bis 11,
**dadurch gekennzeichnet, dass**
die Verzögerungsstrecke (3, 3') im Strahlgang vor der Sendeoptik angeordnet ist.

13. Entfernungsmessanordnung nach einem der vorangehenden Ansprüche 8 bis 11,
**dadurch gekennzeichnet, dass**
die Verzögerungsstrecke (3) im Strahlgang nach der Empfangsoptik angeordnet ist.

14. Entfernungsmessanordnung nach einem der vorangehenden Ansprüche 8 bis 13,
**dadurch gekennzeichnet, dass**
die interferometrische Entfernungsmessanordnung ein weiteres Interferometer als Kalibrierinterferometer aufweist, insbesondere in Etalon- oder Mach-Zehnder-Konfiguration.

15. Messgerät zur Vermessung von Oberflächen, insbesondere Koordinatenmessgerät zur Vermessung von industriellen Werkstücken, mit

- Führungsmitteln (14, 15) zur definiert abtastenden Führung eines Probenkopfes über die zu vermessende Oberfläche und einer
- interferometrischen Entfernungsmessanordnung nach einem der Ansprüche 8 bis 14,
wobei
- der Probenkopf wenigstens einen Emissions- und Empfangsstrahlgang zur Emission der Messstrahlung (MS) und
- der Strahlgang in Mess- und Referenzinterferometerarm einen teilweise gemeinsamen Teil aufweisen, insbesondere mit einer den Referenzinterferometerarm definierenden und innerhalb der zum Emittieren des Laserstrahls verwendeten Strahlformungsoptik liegenden Referenzfläche, vorzugsweise der Referenzinterferometerarm durch einen Reflex an der optischen Austrittsfläche einer Gradientenindex-Linse der Strahlformungsoptik definiert ist.

Fig. 4

Fig. 5

Fig. 6

$$\mathscr{F}ig. 7$$

$$\mathscr{F}ig. 8a$$

$$\mathscr{F}ig. 8b$$

$$\mathscr{F}ig. 9a$$

$$\mathscr{F}ig. 9b$$

Fig. 10

Fig. 11

$coh(z)$ 0.5

−40  −20  0  20  40

$z$

$\mathcal{F}ig. 12$

$w(z, w_0, d_{w0})$  0.1

$−w(z, w_0, d_{w0})$  −0.1

10  20  30

$z$

$\mathcal{F}ig. 13$

$dB$

*OPD*

$\mathcal{F}ig.\ 14$

$w(z,w_0,d_{w0})$

$-w(z,w_0,d_{w0})$

$z$

$\mathcal{F}ig.\ 15$

*Fig. 16*

*Fig. 17*

$w(z, w_0, d_{w0})$

$-w(z, w_0, d_{w0})$

$z$

Fig. 18

$dB$

$OPD$

Fig. 19

**Europäisches Patentamt**
**European Patent Office**
**Office européen des brevets**

## EUROPÄISCHER RECHERCHENBERICHT

Nummer der Anmeldung

EP 11 17 1582

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 627 731 A (WATERS JAMES P [US] ET AL) 9. Dezember 1986 (1986-12-09) * Zusammenfassung; Abbildung 1 * * Spalte 1 - Spalte 4 * ----- | 1-4,7-9, 12,15 | INV. G01B11/24 |
| Y,D | WO 2009/036861 A1 (LEICA GEOSYSTEMS AG [CH]; SIERCKS KNUT [CH]; JENSEN THOMAS [CH]; SCHNE) 26. März 2009 (2009-03-26) * Zusammenfassung; Abbildungen 1,4a,9 * * Seite 13 - Seite 24 * ----- | 1-15 | |
| Y | US 2004/061865 A1 (DRABAREK PAWEL [DE]) 1. April 2004 (2004-04-01) * Zusammenfassung; Abbildungen 1,2 * * Absatz [0017] - Absatz [0026] * ----- | 1-5,7-9, 12-15 | |
| Y | US 2008/117436 A1 (ALTENBERGER MICHAEL [DE] ET AL) 22. Mai 2008 (2008-05-22) * Zusammenfassung; Abbildungen 1,5 * * Absatz [0051] - Absatz [0064] * ----- | 1-4,7,8, 10-12, 14,15 | |
| Y | DE 198 19 762 A1 (BOSCH GMBH ROBERT [DE]) 25. November 1999 (1999-11-25) * Zusammenfassung; Abbildungen 1,2 * * Spalte 3 - Spalte 6 * ----- | 1-4,6-9, 11,12, 14,15 | RECHERCHIERTE SACHGEBIETE (IPC) G01B |

Der vorliegende Recherchenbericht wurde für alle Patentansprüche erstellt

| Recherchenort | Abschlußdatum der Recherche | Prüfer |
|---|---|---|
| München | 22. November 2011 | Stanciu, C |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 17 1582

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-11-2011

| Im Recherchenbericht angeführtes Patentdokument | Datum der Veröffentlichung | Mitglied(er) der Patentfamilie | | Datum der Veröffentlichung |
|---|---|---|---|---|
| US 4627731 A | 09-12-1986 | AT | 74425 T | 15-04-1992 |
| | | EP | 0241512 A1 | 21-10-1987 |
| | | FI | 871929 A | 30-04-1987 |
| | | JP | 6052164 B | 06-07-1994 |
| | | JP | S63500744 A | 17-03-1988 |
| | | US | 4627731 A | 09-12-1986 |
| | | WO | 8701438 A1 | 12-03-1987 |
| WO 2009036861 A1 | 26-03-2009 | AU | 2008300962 A1 | 26-03-2009 |
| | | CA | 2698961 A1 | 26-03-2009 |
| | | CN | 101802542 A | 11-08-2010 |
| | | EP | 2037214 A1 | 18-03-2009 |
| | | EP | 2185890 A1 | 19-05-2010 |
| | | JP | 2010539458 A | 16-12-2010 |
| | | US | 2010312524 A1 | 09-12-2010 |
| | | WO | 2009036861 A1 | 26-03-2009 |
| US 2004061865 A1 | 01-04-2004 | DE | 10057540 A1 | 06-06-2002 |
| | | EP | 1337803 A1 | 27-08-2003 |
| | | JP | 4131666 B2 | 13-08-2008 |
| | | JP | 2004514124 A | 13-05-2004 |
| | | US | 2004061865 A1 | 01-04-2004 |
| | | WO | 0240936 A1 | 23-05-2002 |
| US 2008117436 A1 | 22-05-2008 | EP | 1864079 A1 | 12-12-2007 |
| | | US | 2008117436 A1 | 22-05-2008 |
| | | WO | 2006102997 A1 | 05-10-2006 |
| DE 19819762 A1 | 25-11-1999 | DE | 19819762 A1 | 25-11-1999 |
| | | EP | 1082580 A1 | 14-03-2001 |
| | | JP | 2002513919 A | 14-05-2002 |
| | | US | 6490046 B1 | 03-12-2002 |
| | | WO | 9957506 A1 | 11-11-1999 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009036861 A1